# FASCICULE DE BREVET EUROPEEN

(11) **EP 2 404 047 B1**
(45) Date de publication et mention de la délivrance du brevet: **25.01.2017**
(21) Numéro de dépôt: 10709917.8
(22) Date de dépôt: 26.02.2010
(51) Int. Cl.: F02D 41/18, F02D 41/24, G01F 1/696, G01F 1/72, F02D 41/00

(54) **PROCEDE DE TRAITEMENT D'UN SIGNAL ISSU D'UN DEBITMETRE DE MESURE D'UN DEBIT DE GAZ DANS UN MOTEUR A COMBUSTION INTERNE**
VERFAHREN ZUR VERARBEITUNG EINES SIGNALS AUS EINEM STRÖMUNGSMESSER ZUR MESSUNG EINES GASSTROMS IN EINEM VERBRENNUNGSMOTOR
METHOD FOR PROCESSING A SIGNAL FROM A FLOW METER FOR MEASURING A GAS FLOW IN AN INTERNAL COMBUSTION ENGINE

(30) Priorité: 03.03.2009 FR 0900948
(43) Date de publication de la demande: 11.01.2012
(73) Titulaire: Renault S.A.S., 92100 Boulogne-Billancourt (FR)
(72) Inventeur: COLLET, Alexandre, F-91150 Etampes (FR); ROBERT, Kevin, F-94600 Choisy le Roi (FR); GRESIAK, Benjamin, F-91940 Milly la Foret (FR)
(86) Numéro de dépôt international: PCT/FR2010/050341
(87) Numéro de publication internationale: WO 2010/100372

(56) Documents cités:
- EP-A1- 0 219 967
- JP-A- 58 027 828
- US-A- 4 386 520
- US-A- 4 730 255
- US-A- 5 537 981

## Description

La présente invention concerne un procédé de traitement d'un signal issu d'un débitmètre de mesure d'un débit de gaz dans un moteur à combustion interne de sorte à déterminer la quantité d'air admis dans le moteur. L'invention concerne encore un procédé de configuration d'un système de traitement d'un signal issu d'un débitmètre de mesure d'un débit de gaz dans un moteur à combustion interne. L'invention concerne également un support de données comprenant des programmes informatiques pour régir ces procédés. L'invention concerne encore un système de traitement, un système de mesure comprenant un tel système de traitement et un véhicule automobile comprenant un tel système de traitement ou un tel système de mesure.

Les futures normes anti-pollution vont imposer aux constructeurs automobiles d'améliorer le contrôle moteur, c'est-à-dire de piloter le moteur plus finement afin que son impact sur l'environnement soit réduit. Pour cela, il est nécessaire de connaître précisément les quantités d'air fournies aux chambres de combustion du moteur. A cette fin, il est utilisé des débitmètres d'air mesurant le débit d'air alimentant le moteur. Il peut s'agir de tout type de moteur thermique à combustion, en particulier les moteurs thermiques à combustion interne sans distinction du nombre de temps du cycle de fonctionnement, du mode d'injection,etc. L'invention s'applique ainsi :
- aux moteurs diesel, suralimentés ou non, tout mode de combustion,
- aux moteurs à essence allumage commandé, suralimentés ou non, tout mode de combustion,
- aux moteurs Flex-fuel utilisant un mélange variable d'essence et d'éthanol,
- aux moteurs à gaz.

Sur un moteur à combustion, toute information de débit (volumique ou massique) est susceptible d'être mesuré grâce à un capteur de débit comme un débitmètre ou un capteur de pression. Les signaux bruts issus d'un capteur de débit sont traités par un programme informatique contenu dans un calculateur ou unité de contrôle électronique, le programme informatique permettant de conditionner les signaux et de les corriger, notamment de les filtrer, afin d'obtenir des informations fiables qui puissent être utilisées par des stratégies de contrôle du moteur. Avant ces traitements, une cartographie est habituellement utilisée pour convertir les signaux électriques en des informations physiques de débit.

Le principe de mesure de débit par un débitmètre est basé sur une mesure de vitesse locale dans une section du débitmètre, puis une multiplication de la valeur de vitesse mesurée par l'aire de la section du débitmètre. Cependant, ce principe de mesures de débit est sensible à 2 facteurs :
- le profil de vitesse dans la section, cette vitesse n'étant pas constante du fait des phénomènes aérodynamiques,
- les pulsations de débit résultant du fonctionnement cyclique du moteur.

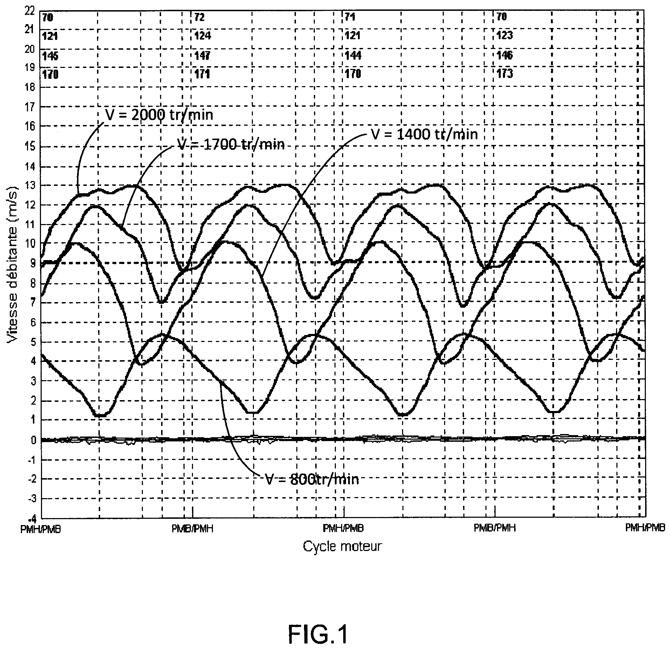

Il apparaît, en outre, que le régime de rotation du moteur et la charge sont deux variables principales influençant la forme de la pulsation de débit comme le montre la figure 1 sur laquelle sont représentées 4 courbes d'évolutions temporelles de vitesse de gaz dans une tubulure du moteur pour des régimes de rotation du moteur de 800 tours/minute, de 1400 tours/minute, de 1700 tours/minute et de 2000 tours/minute, toutes ces courbes se rapportant à une même charge de 5 bars.

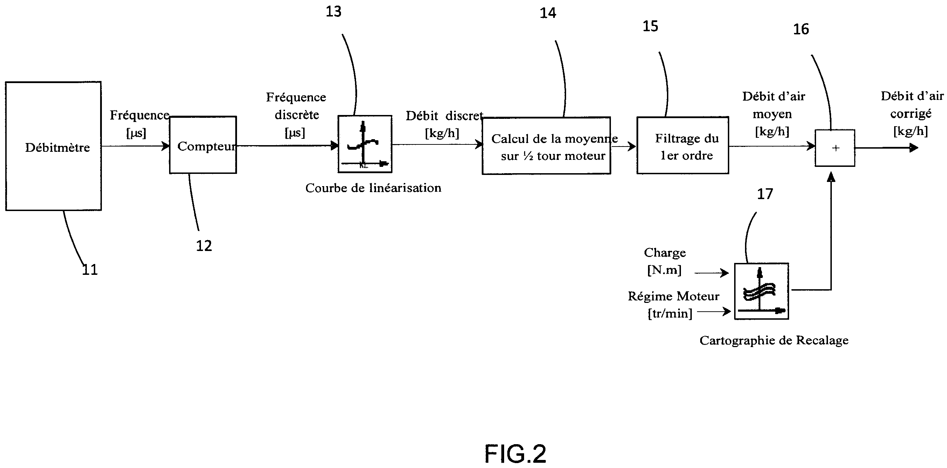

Il est possible, pour obtenir une valeur précise de débit, d'utiliser une cartographie fonction de la charge et du régime du moteur. La chaîne de traitement du signal délivré par un débitmètre est alors décrite ci-dessous en référence à la figure 2.

Un débitmètre 11 fournit un signal électrique ayant une fréquence ou une tension dépendant du débit de gaz traversant le débitmètre. Ainsi, la fréquence du signal est une image du débit de gaz. Un compteur de périodes 12 discrétise cette fréquence, on obtient ainsi en sortie du compteur 12 une fréquence discrète. Grâce à un moyen de linéarisation 13, la fréquence discrète est ensuite transformée en un débit discret. Ce moyen de linéarisation utilise une courbe de linéarisation du débitmètre représentant les valeurs de débit de gaz traversant le débitmètre en fonction de la fréquence du signal de sortie du débitmètre. Le débit d'air discret demeure une information instantanée qui est ensuite moyennée sur un demi-tour du moteur grâce à un moyen 14, puis filtrée par un filtre 15 du premier ordre pour donner à la sortie du filtre 15 une information de débit de gaz moyen. Enfin, ce débit d'air moyen est corrigé par un opérateur 16 utilisant pour cette correction une ou plusieurs valeurs fournies par une cartographie 17. Cette cartographie 17 fournit une ou plusieurs valeurs en fonction d'une valeur de charge du moteur et d'une valeur de régime de rotation du moteur. Ainsi, il est possible d'obtenir une valeur de débit de gaz précise quelles que soient les valeurs du couple charge et régime de rotation du moteur.

Néanmoins, dans le futur et dès aujourd'hui, il est prévu d'ajouter dans les circuits d'admission des gaz utilisés dans le fonctionnement du moteur différents actionneurs, notamment des vannes et/ou des volets, qui, selon leur état, définissent différents modes d'admission du moteur ou différentes configurations d'admission moteur.

Dès lors, le mode d'admission du moteur n'est plus seulement défini par les paramètres de régime de rotation du moteur et de charge du moteur, mais également par les états de ces actionneurs. Par exemple, dans le cas de futurs projets de réalisation de moteurs diesel répondant à la norme Euro 6, les moteurs présenteront deux modes d'admission :
- un mode A dans lequel une recirculation des gaz d'échappement EGR est faite dans une section haute pression du circuit d'admission,
- un mode B dans lequel une recirculation des gaz d'échappement EGR est faite dans une section basse pression du circuit d'admission.

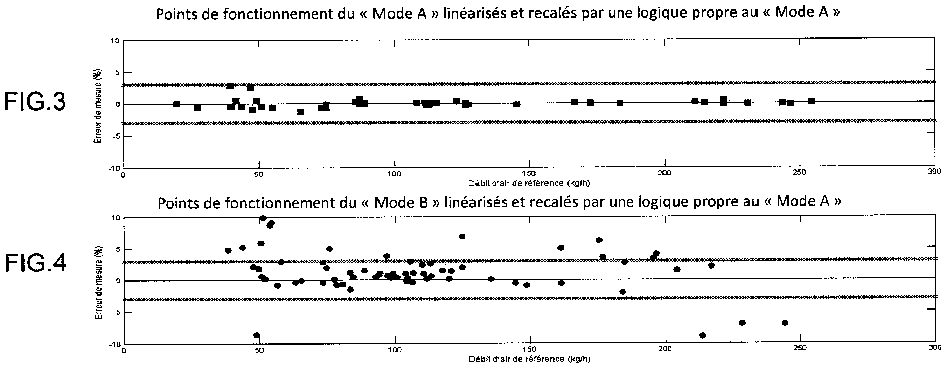

Dès lors, si on utilise la chaîne de traitement décrite précédemment après l'avoir configuré pour qu'elle soit adaptée à fournir des valeurs de débit de gaz précises lorsque le moteur fonctionne dans le mode A, on obtient le graphique représenté à la figure 3. On remarque que, lorsque le moteur fonctionne dans le mode A, quel que soit le débit d'air admis dans le moteur, l'erreur de mesure sur la valeur de débit fournie par le débitmètre est à l'intérieur d'une plage +/-3 %.

En revanche, on remarque que, lorsque le moteur fonctionne dans le mode B, l'erreur de mesure sur la valeur de débit fournie par le débitmètre est à l'extérieur de la plage +/-3 % et atteint même +/-10 %, comme représenté sur la figure 4.

La plage d'erreur de +/-3 % constitue la limite acceptable de l'erreur de mesure sur le débit pour les projets de moteur diesel Euro 6.

Les différentes données d'erreurs des graphiques précédents sont obtenues en faisant la différence entre les débits mesurés grâce au débitmètre et fournissant des informations grâce à la chaîne de traitement défini précédemment et des débits mesurés grâce à un débitmètre de référence insensible aux modes d'admission du moteur par exemple, ce débitmètre de référence utilise une analyse de la composition des gaz d'échappement du moteur.

De la même façon, la chaîne de traitement pourrait être configurée et adaptée pour fournir des valeurs de débit précises lorsque le moteur fonctionne dans le mode d'admission B. Dans ce cas, ce serait les valeurs de débit mesurées alors que le moteur fonctionne selon le mode A qui n'aurait pas la précision requise.

Une solution serait de configurer et d'adapter la chaîne de traitement selon une logique de compromis pour qu'elle fournisse des valeurs de débit aussi précises lorsque le moteur fonctionne dans le mode A que lorsqu'il fonctionne dans le mode B. Néanmoins, avec cette solution, la précision requise ne serait atteinte ni dans le mode A, ni dans le mode B.

Le document US 4 386 520 décrit un dispositif de mesure du débit d'air entrant dans un moteur à combustion interne et le document JP 58 027828 décrit un système permettant de commander un débit de carburant en fonction d'un débit de gaz dans un système d'admission d'un moteur à combustion interne.

On connaît du document DE 196 33 680 un procédé de correction d'un signal délivré par un débitmètre utilisé pour la mesure du débit massique d'air dans un moteur essence. Le débitmètre mesure la quantité d'air frais admise par le moteur, image du remplissage en air du moteur. Le signal de débit d'air délivré par le débitmètre est divisé par une constante et par le régime moteur, de sorte que le signal obtenu en sortie est un signal brut de débit d'air par coup, c'est-à-dire une image du remplissage de chaque cylindre du moteur. Ce signal brut de débit d'air par coup est ensuite corrigé à partir d'une cartographie fonction de la position angulaire d'un papillon d'admission, du régime moteur et de la température d'air d'admission. Cette correction permet de prendre en compte l'influence de la température d'air sur le remplissage du moteur en intégrant la température de l'air réellement admis par rapport à une température d'air standard. Ce procédé présente des inconvénients. D'une part, la correction fonction du régime moteur et de la température d'air admis dans le moteur ne permet pas de s'affranchir de l'influence des pulsations des ondes de pression présentes dans le circuit d'admission et qui ont une influence sur le remplissage du moteur. D'autre part, la correction est sensible aux dispersions des mesures fournies par le capteur de température et par le capteur de position angulaire du papillon.

On connaît du brevet US 6 556 929 un procédé de correction d'un signal délivré par un débitmètre par le biais d'une analyse des caractéristiques de moyen et d'amplitude du signal brut fourni par ce débitmètre. La correction appliquée au signal brut moyen du débitmètre est fonction de la durée de la phase d'admission du moteur et une cartographie calibrée, elles-mêmes fonction de la moyenne et de l'amplitude du signal brut issu du débitmètre. Le signal corrigé est ensuite envoyé au système de contrôle moteur. Ce procédé de correction présente des inconvénients. D'une part, le procédé de correction ne prend pas en compte les effets pulsatoires générés dans la ligne d'admission. D'autre part, le procédé de correction nécessite des ressources de calcul importantes.

On connaît du brevet US 7 286 925 deux procédés de correction d'un signal issu d'un débitmètre. Le premier procédé consiste à modifier une courbe de linéarisation du débitmètre. Ces courbes, traduisant le débit massique d'air traversant le débitmètre en fonction de la tension délivrée, sont ajustées en fonction de l'état pulsatoire de l'écoulement d'air. Le deuxième procédé consistant à corriger l'erreur induite par les pulsations du moteur à l'aide d'un système de filtrage du signal délivré par le débitmètre. Ce système de filtrage associe trois filtres (un filtre passe-haut, un filtre passe-bas et un filtre passe bande) et un moyen de décalage calibré. Chaque filtre peut être désactivé indépendamment des autres. Ce système de filtrage lisse le signal brut délivré par le débitmètre. Une dernière correction s'applique au signal délivré par le système de filtrage à partir d'une cartographie fonction des caractéristiques fréquentielles du signal. Ces procédés présentent des inconvénients. D'une part, aucune méthode d'identification de la courbe corrigée de linéarisation du débitmètre n'est donnée et le procédé est complexe à mettre en oeuvre dans un système de contrôle moteur en raison de la complexité des phénomènes aéro-acoustiques. D'autre part, la correction par le système de filtrage permet de lisser le signal délivré par le débitmètre mais ne permet pas de corriger l'influence physique des phénomènes pulsatoires dans la ligne d'admission du moteur.

Les procédés décrits dans ces documents se limitent au lissage des pulsations induites par le moteur.

Le but de l'invention est de fournir un procédé de traitement d'un signal issu d'un débitmètre d'air permettant de remédier aux problèmes évoqués précédemment et améliorant les procédés de traitement connus de l'art antérieur. En particulier, l'invention propose un procédé de traitement simple, permettant d'obtenir une mesure précise d'un débit d'air admis dans un moteur, alors que ce moteur peut fonctionner selon différents modes d'admission.

Selon l'invention, le procédé de traitement d'un signal issu d'un débitmètre de mesure d'un débit de gaz dans un moteur à combustion interne est caractérisé en ce qu'on traite le signal selon une première logique lorsque le moteur fonctionne selon un premier mode d'admission et en ce qu'on traite le signal selon une deuxième logique lorsque le moteur fonctionne selon un deuxième mode d'admission.

Le premier mode d'admission est caractérisé par l'activation d'une vanne EGR haute pression et/ou le deuxième mode d'admission est caractérisé par l'activation d'une vanne EGR basse pression.

Le procédé de traitement peut comprendre une étape de conversion d'une caractéristique électrique du signal issu du débitmètre en une valeur de débit instantané, cette étape de conversion étant réalisée selon une première logique lorsque le moteur fonctionne selon le premier mode d'admission et selon une deuxième logique lorsque le moteur fonctionne selon le deuxième mode d'admission.

Le procédé de traitement peut comprendre une étape de réalisation d'une moyenne de sorte à obtenir, à partir de valeurs de débits instantanés, une valeur de débit moyen.

Le procédé de traitement peut comprendre une étape de correction de sorte à obtenir, à partir d'une valeur de débit, une valeur de débit corrigé, cette étape de correction étant réalisée selon une première logique lorsque le moteur fonctionne selon le premier mode d'admission et selon une deuxième logique lorsque le moteur fonctionne selon le deuxième mode d'admission.

L'étape de correction peut être réalisée grâce à une valeur fournie par une cartographie, cette valeur dépendant de paramètres moteur, notamment de la charge et/ou du régime de rotation du moteur.

Selon l'invention, le procédé de configuration d'un système de traitement d'un signal issu d'un débitmètre de mesure d'un débit de gaz dans un moteur à combustion interne est caractérisé en ce qu'il comprend une itération de l'étape suivante :
- déterminer une logique de traitement du signal issu du débitmètre de sorte à obtenir une valeur de débit,
sur l'ensemble des modes d'admission utilisés par le moteur.

L'invention concerne aussi un support d'enregistrement de données lisible par un calculateur sur lequel est enregistré un programme d'ordinateur comprenant des moyens logiciels de mise en oeuvre des étapes du procédé de traitement défini précédemment.

Selon l'invention, le système de traitement d'un signal issu d'un débitmètre de mesure d'un débit de gaz dans un moteur à combustion interne est caractérisé en ce qu'il comprend des moyens matériels et/ou logiciels de mise en oeuvre du procédé de traitement défini précédemment ou de mise en oeuvre du procédé de configuration défini précédemment.

Selon l'invention, le système de mesure d'un débit de gaz dans un moteur à combustion interne est caractérisé en ce qu'il comprend un système de traitement défini précédemment et un débitmètre.

Selon l'invention, le véhicule automobile comprend un système de traitement défini précédemment ou un système de mesure défini précédemment.

Le dessin annexé représente, à titre d'exemple, des illustrations du principe du procédé de traitement selon l'invention.
La figure 1 est un graphique illustrant l'influence du régime de rotation du moteur sur le débit d'air admis dans le moteur.
La figure 2 est un schéma illustrant une chaîne de traitement d'un signal issu d'un débitmètre afin de déterminer une valeur de débit d'air.
La figure 3 est un graphique illustrant l'erreur de mesure réalisée lorsqu'on mesure le débit d'air avec un débitmètre donné alors que le moteur fonctionne selon un premier mode d'admission, la chaîne de traitement du signal issu du débitmètre étant configurée et adaptée à ce premier mode d'admission.
La figure 4 est un graphique illustrant l'erreur de mesure réalisée lorsqu'on mesure le débit d'air avec le même débitmètre alors que le moteur fonctionne selon un deuxième mode d'admission, la chaîne de traitement du signal issu du débitmètre étant configurée et adaptée au premier mode d'admission.
La figure 5 est un schéma illustrant une chaîne de traitement d'un signal issu d'un débitmètre afin de déterminer une valeur de débit d'air, cette chaîne de traitement étant conforme à l'invention.
Les figures 6 et 7 sont des schémas illustrant des étapes de configuration d'une chaîne de traitement ou d'un système de traitement selon l'invention, permettant de traiter un signal issu d'un débitmètre pour fournir une valeur de débit précise.
Les figures 8 et 9 sont des graphiques illustrant l'erreur de mesure réalisée lorsqu'on mesure le débit d'air avec un même débitmètre alors que le moteur fonctionne selon le premier mode d'admission et selon le deuxième mode d'admission, la chaîne de traitement du signal issu du débitmètre étant configurée et adaptée selon l'invention.

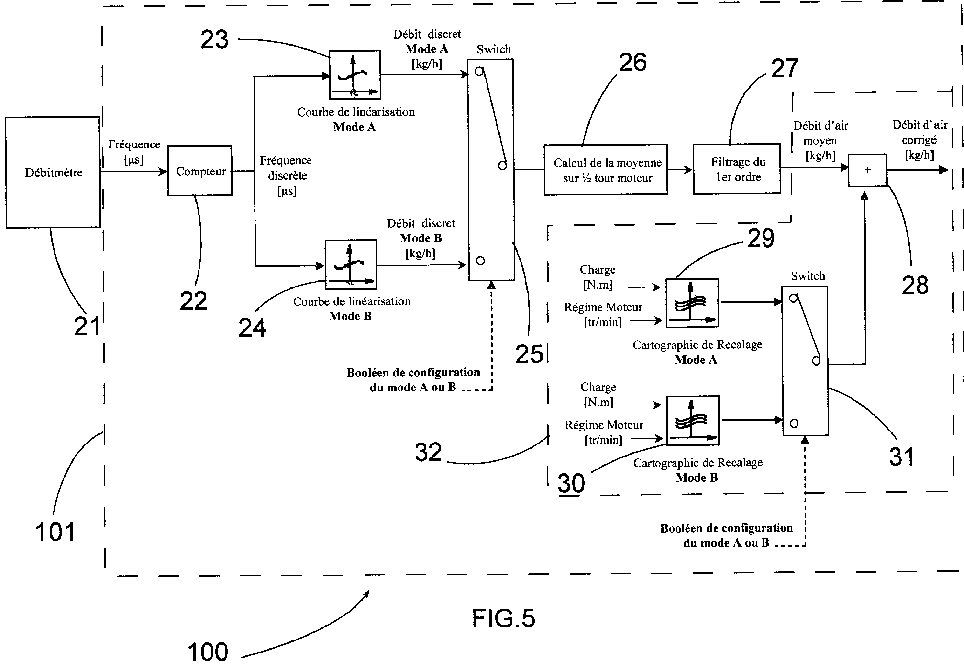

Un mode de réalisation conforme à l'invention d'un système 100 de mesure d'un débit de gaz, notamment de gaz d'admission, dans un moteur à combustion, en particulier un moteur à combustion d'entraînement d'un véhicule automobile, est décrit ci-après en référence à la figure 5.

Le système de mesure de débit de gaz comprend principalement un débitmètre 21 et un système 101 de traitement d'un signal, par exemple un signal électrique, issu du débitmètre.

Dans le mode de réalisation décrit, un signal électrique cyclique est issu du débitmètre. La fréquence de ce signal électrique est déterminée par le débit de gaz mesuré par le débitmètre. Ce signal électrique est fourni au système de traitement.

Un premier moyen de comptage 22 permet de déterminer la fréquence du signal électrique reçu du débitmètre. En sortie du moyen de comptage, on recueille cette valeur de fréquence. Elle est fournie à un premier moyen de linéarisation 23 et à un deuxième moyen de linéarisation 24. Le premier moyen de linéarisation permet de convertir la valeur de fréquence en une première valeur de débit instantané ou discret, cette conversion étant faite dans l'hypothèse que le moteur à combustion interne fonctionne selon un premier mode d'admission. Le deuxième moyen de linéarisation permet de convertir la valeur de fréquence en une deuxième valeur de débit instantané ou discret, cette conversion étant faite dans l'hypothèse que le moteur à combustion interne fonctionne selon un deuxième mode d'admission.

Les deux valeurs de débit instantané sont transmises à une porte 25 en sortie de laquelle on retrouve, soit la première valeur de débit instantané, soit la deuxième valeur de débit instantané, selon que le moteur fonctionne selon le premier mode d'admission (mode A) ou selon le deuxième mode d'admission (mode B). Un signal électrique, par exemple un signal logique, est fourni à cette porte 25. La valeur de ce signal est déterminée par le mode d'admission selon lequel le moteur fonctionne. Il détermine en conséquence laquelle des deux valeurs de débit fournies par les premier et deuxième moyens de linéarisation se retrouve en sortie de la porte 25.

Un moyen de calcul d'une moyenne 26 permet de calculer la moyenne du débit instantané obtenu en sortie de la porte 25 sur une période donnée, par exemple un demi-tour du vilebrequin du moteur à combustion.

La valeur moyenne obtenue en sortie du moyen de calcul 26 est ensuite filtrée grâce à un moyen de filtrage 27, par exemple un filtre du premier ordre. Une valeur moyenne de débit attaque alors un moyen de correction 32.

Le moyen de correction 32 comprend par exemple un premier moyen 29 de détermination d'une valeur de recalage, par exemple par utilisation d'une cartographie, un deuxième moyen 30 de détermination d'une valeur de recalage, par exemple par utilisation d'une cartographie, une porte logique 31 et un opérateur d'addition 28. Le premier moyen 29 de détermination d'une valeur de recalage utilise des paramètres de fonctionnement du moteur, par exemple la charge et/ou le régime de rotation du moteur pour déterminer une première valeur de recalage. De même, le deuxième moyen 30 de détermination d'une valeur de recalage utilise des paramètres de fonctionnement du moteur, par exemple la charge et/ou le régime de rotation du moteur pour déterminer une deuxième valeur de recalage. Les première et deuxième valeurs de recalage sont fournies à la porte 31, ainsi qu'un signal électrique, par exemple un signal logique. La valeur de ce signal est déterminée par le mode d'admission selon lequel le moteur fonctionne. Il détermine en conséquence laquelle des première et deuxième valeurs de recalage fournies par les premier et deuxième moyens de détermination se retrouve en sortie de la porte 31 et est fournie à l'opérateur 28. Cette valeur de recalage est ainsi ajoutée à la valeur de débit d'air moyen issu du moyen de filtrage 27 au niveau de l'opérateur 28 pour constituer, en sortie d'opérateur 28, une valeur de débit d'air corrigé.

Tous les moyens du système de traitement peuvent être intégrés dans un calculateur comprenant un support d'enregistrement ou susceptible de fonctionner avec un support d'enregistrement. Ces moyens, ou certains de ces moyens, peuvent être réalisé sous forme de programmes d'ordinateur. Ils permettent de régir et/ou de mettre en oeuvre le dispositif de traitement objet de la présente invention.

Grâce à cette invention, il est possible de déterminer de manière très précise les valeurs de débit de gaz admis dans un moteur à combustion interne.

Différentes variantes du mode de réalisation décrit précédemment sont envisageables. Par exemple, les portes 25 et 31 pourraient se trouver en amont des moyens 23, 24, 29, 30 de sorte à ce que seule une valeur de débit instantané soit calculée et seule une valeur de recalage soit calculée.

De même, l'opérateur 28 pourrait être un opérateur de multiplication. Dans ce cas, les valeurs obtenues en sortie de la porte 31 ne seraient plus homogènes à des valeurs de débit, mais à des coefficients sans dimension.

Enfin, il est clair que le système de traitement selon l'invention pourrait être de nature à gérer plus de 2 modes d'alimentation. On aurait alors plus de 2 moyens de linéarisation, fonctionnant chacun selon une logique différente, et plus de 2 moyens de détermination de valeur de recalage, fonctionnant chacun selon une logique différente. Ainsi, on peut utiliser une logique de traitement propre à chaque mode d'admission.

La mise en oeuvre d'un mode d'admission résulte de besoins variés comme la dépollution, la régénération du filtre à particule ou bien la suralimentation. Ces modes d'admission correspondent donc à des états moteurs bien définis qu'il est possible d'identifier et qui déterminent l'état des signaux logiques attaquant les portes 25 et 31. Il est de ce fait possible d'associer à un mode d'admission d'air une courbe de linéarisation et une cartographie de recalage du débit d'air. Un premier mode d'alimentation est par exemple caractérisé par un retour de gaz d'échappement dans le circuit d'admission en amont du compresseur (activation d'une vanne EGR basse pression) et un deuxième mode d'alimentation est par exemple caractérisé par un retour de gaz d'échappement dans le circuit d'admission en aval du compresseur (activation d'une vanne EGR haute pression). De préférence, les différents modes d'admission se différencient par l'état (ouvert ou fermé) d'un volet ou d'une vanne du circuit d'admission. En variante, les différents modes d'admission se différencient par l'état (ouvert ou fermé) d'un volet d'air en aval d'un compresseur ou d'un volet en amont d'un filtre à air. De préférence, les différents modes d'admission ne se différencient pas par deux états entrouverts d'un volet ou d'une vanne, comme un volet entrouvert à 30° et un volet entrouvert à 60°.

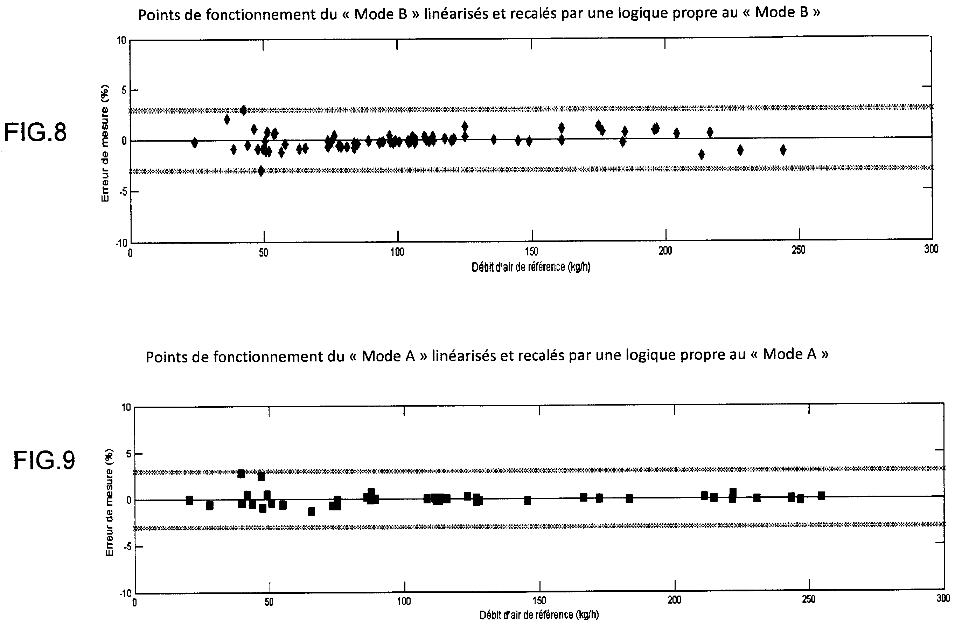

Grâce au système de traitement selon l'invention, on obtient les résultats suivants :
Lorsque le moteur fonctionne dans le mode A, on obtient le graphique représenté à la figure 9. On remarque que, lorsque le moteur fonctionne dans le mode A, quel que soit le débit d'air admis dans le moteur, l'erreur de mesure sur la valeur de débit fournie par le débitmètre est à l'intérieur d'une plage +/-3 %.

De même, lorsque le moteur fonctionne dans le mode B, on obtient le graphique représenté à la figure 8. On remarque que, lorsque le moteur fonctionne dans le mode B, quel que soit le débit d'air admis dans le moteur, l'erreur de mesure sur la valeur de débit fournie par le débitmètre est à l'intérieur d'une plage +/-3 %.

L'invention porte également sur un procédé de configuration d'un système de traitement d'un signal issu d'un débitmètre.

Dans une première étape, on sélectionne un moteur du type destiné à fonctionner avec un système de traitement un signal issu d'un débitmètre selon l'invention.

Dans une deuxième étape, on fait fonctionner le moteur selon un premier mode d'alimentation.

Dans une troisième étape, on fait fonctionner le moteur, de façon stabilisée, selon un premier ensemble de valeurs de paramètres du moteur, par exemple selon un premier couple de valeurs charge/régime de rotation du moteur. Dans cette étape, on mesure et on relève la fréquence Fhfm du signal électrique fourni par le débitmètre. De même, on mesure et on relève la valeur de débit de référence de gaz Qref fourni au moteur, cette mesure étant réalisée grâce à un système de mesure de débit très précis et indépendant du débitmètre. La mesure du débit de référence peut par exemple être réalisée par une mesure de la composition des gaz d'échappement.

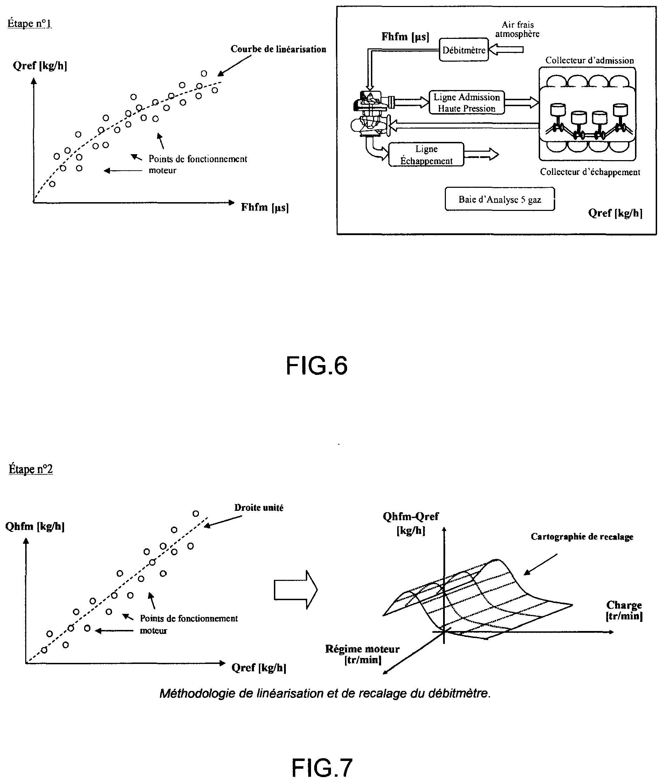

La troisième étape est réitérée un certain nombre de fois avec des valeurs d'ensemble de paramètres moteur différentes, de sorte à pouvoir construire un graphique tel que celui représenté à la figure 6 et présentant, en abscisses, la fréquence du signal électrique et, en ordonnées, le débit de référence mesuré. Les différentes itérations de la troisième étape permettent de déterminer une loi, par exemple une loi mathématique, liant les valeurs de fréquence Fhfm et les valeurs de débit de référence Qref. Cette loi sera utilisée dans le moyen de linéarisation qui sera mis en oeuvre lorsque le moteur fonctionnera dans le premier mode d'alimentation.

Dans une quatrième étape, pour chaque point de fonctionnement utilisé à l'étape précédente, on détermine à partir de la fréquence Fhfm du signal fourni par le débitmètre une valeur de débit de gaz Qhfm obtenue par la loi déterminée précédemment. On détermine ensuite la différence entre cette dernière valeur de débit et la valeur de débit de référence Qref. On relève cette différence et les valeurs de l'ensemble des paramètres du moteur ayant permis d'obtenir la fréquence Fhfm.

La quatrième étape est réitérée sur l'ensemble des points de fonctionnement du moteur de sorte à pouvoir construire une cartographie telle que celle représentée à la figure 7 et présentant, en abscisses, le régime moteur et, en ordonnées, la charge et, en cotes, la différence entre la valeur de débit de gaz Qhfm et la valeur de débit de gaz de références Qref. Les différentes itérations de la quatrième étape permettent de déterminer une loi (de préférence une cartographie), par exemple une loi mathématique, liant les ensembles de valeurs des paramètres déterminant les points de fonctionnement et les différences de débit. Cette loi sera utilisée dans le moyen de correction qui sera mis en oeuvre lorsque le moteur fonctionnera dans le premier mode d'alimentation.

Les deuxième à quatrième étapes sont réitérées sur l'ensemble des modes d'admission qui peuvent être utilisées par le moteur.

Les différentes lois et cartographies sont ensuite stockées en mémoire dans le système de traitement du signal issu du débitmètre. Ainsi, le signal issu du débitmètre peut être traité selon la logique appropriée en fonction du mode d'alimentation du moteur.

L'objet de l'invention est différent de l'art antérieur où aucun des documents ne prévoit un procédé permettant à un débitmètre mesurant le débit d'air admis dans un moteur de fournir des mesures de débit d'air précises alors que ce moteur peut fonctionner avec un premier mode d'admission caractérisé par l'activation d'une vanne EGR haute pression et/ou un deuxième mode d'admission caractérisé par l'activation d'une vanne EGR basse pression.

## Revendications

1. Procédé de traitement d'un signal issu d'un débitmètre (21) de mesure d'un débit de gaz dans un moteur à combustion interne, **caractérisé en ce qu'**on traite le signal selon une première logique lorsque le moteur fonctionne selon un premier mode d'admission et **en ce qu'**on traite le signal selon une deuxième logique lorsque le moteur fonctionne selon un deuxième mode d'admission, le premier mode d'admission étant **caractérisé par** l'activation d'une vanne EGR haute pression et/ou le deuxième mode d'admission étant **caractérisé par** l'activation d'une vanne EGR basse pression.

2. Procédé de traitement selon l'une des revendications précédentes, **caractérisé en ce qu'**il comprend une étape de conversion d'une caractéristique électrique du signal issu du débitmètre en une valeur de débit instantané, cette étape de conversion étant réalisée selon une première logique lorsque le moteur fonctionne selon le premier mode d'admission et selon une deuxième logique lorsque le moteur fonctionne selon le deuxième mode d'admission.

3. Procédé de traitement selon l'une des revendications précédentes, **caractérisé en ce qu'**il comprend une étape de réalisation d'une moyenne de sorte à obtenir, à partir de valeurs de débits instantanés, une valeur de débit moyen.

4. Procédé de traitement selon l'une des revendications précédentes, **caractérisé en ce qu'**il comprend une étape de correction de sorte à obtenir, à partir d'une valeur de débit, une valeur de débit corrigé, cette étape de correction étant réalisée selon une première logique lorsque le moteur fonctionne selon le premier mode d'admission et selon une deuxième logique lorsque le moteur fonctionne selon le deuxième mode d'admission.

5. Procédé de traitement selon la revendication précédente, **caractérisé en ce que** l'étape de correction est réalisée grâce à une valeur fournie par une cartographie, cette valeur dépendant de paramètres moteur, notamment de la charge et/ou du régime de rotation du moteur.

6. Procédé de configuration d'un système de traitement d'un signal issu d'un débitmètre de mesure d'un débit de gaz dans un moteur à combustion interne, **caractérisé en ce qu'**il comprend une itération de l'étape suivante :
- déterminer une logique de traitement du signal issu du débitmètre de sorte à obtenir une valeur de débit,
sur l'ensemble des modes d'admission utilisés par le moteur, un premier mode d'admission étant **caractérisé par** l'activation d'une vanne EGR haute pression et/ou un deuxième mode d'admission étant **caractérisé par** l'activation d'une vanne EGR basse pression.

7. Support d'enregistrement de données lisible par un calculateur sur lequel est enregistré un programme d'ordinateur comprenant des moyens logiciels de mise en oeuvre des étapes du procédé de traitement selon l'une des revendications précédentes.

8. Système (101) de traitement d'un signal issu d'un débitmètre de mesure d'un débit de gaz dans un moteur à combustion interne, **caractérisé en ce qu'**il comprend des moyens matériels (22, 23, 24, 25, 26, 27, 32) et/ou logiciels de mise en oeuvre du procédé de traitement selon l'une des revendications 1 à 5 ou de mise en oeuvre du procédé de configuration selon la revendication 6.

9. Système (100) de mesure d'un débit de gaz dans un moteur à combustion interne, **caractérisé en ce qu'**il comprend un système (101) de traitement selon la revendication 8 et un débitmètre (21).

10. Véhicule automobile comprenant un système de traitement selon la revendication 8 ou un système de mesure selon la revendication 9.

## Patentansprüche

1. Verfahren zur Verarbeitung eines von einem Durchflussmesser (21) zur Messung eines Gasdurchflusses in einem Verbrennungsmotor stammenden Signals, **dadurch gekennzeichnet, dass** das Signal gemäß einer ersten Logik verarbeitet wird, wenn der Motor gemäß einem ersten Ansaugmodus arbeitet, und das Signal gemäß einer zweiten Logik verarbeitet wird, wenn der Motor gemäß einem zweiten Ansaugmodus arbeitet, wobei der erste Ansaugmodus durch die Aktivierung eines AGR-Hochdruckventils gekennzeichnet und/oder der zweite Ansaugmodus durch die Aktivierung eines AGR-Niederdruckventils gekennzeichnet ist.

2. Verarbeitungsverfahren nach einem der vorhergehenden Ansprüche, **dadurch gekennzeichnet, dass** es einen Schritt der Umwandlung eines elektrischen Kennwerts des vom Durchflussmesser stammenden Signals in einen augenblicklichen Durchflusswert enthält, wobei dieser Umwandlungsschritt gemäß einer ersten Logik durchgeführt wird, wenn der Motor gemäß dem ersten Ansaugmodus arbeitet, und gemäß einer zweiten Logik durchgeführt wird, wenn der Motor gemäß dem zweiten Ansaugmodus arbeitet.

3. Verarbeitungsverfahren nach einem der vorhergehenden Ansprüche, **dadurch gekennzeichnet, dass** es einen Schritt der Bildung eines Mittelwerts enthält, um ausgehend von augenblicklichen Durchflusswerten einen mittleren Durchflusswert zu erhalten.

4. Verarbeitungsverfahren nach einem der vorhergehenden Ansprüche, **dadurch gekennzeichnet, dass** es einen Korrekturschritt enthält, um ausgehend von einem Durchflusswert einen korrigierten Durchflusswert zu erhalten, wobei dieser Korrekturschritt gemäß einer ersten Logik durchgeführt wird, wenn der Motor gemäß dem ersten Ansaugmodus arbeitet, und gemäß einer zweiten Logik durchgeführt wird, wenn der Motor gemäß dem zweiten Ansaugmodus arbeitet.

5. Verarbeitungsverfahren nach dem vorhergehenden Anspruch, **dadurch gekennzeichnet, dass** der Korrekturschritt anhand eines von einem Kennfeld gelieferten Werts durchgeführt wird, wobei dieser Wert von Motorparametern abhängt, insbesondere der Last und/oder der Drehzahl des Motors.

6. Konfigurationsverfahren eines Verarbeitungssystems eines von einem Durchflussmesser zur Messung eines Gasdurchflusses in einem Verbrennungsmotor stammenden Signals, **dadurch gekennzeichnet, dass** es eine Iteration des folgenden Schritts enthält:
- Bestimmen einer Verarbeitungslogik des vom Durchflussmesser stammenden Signals, um einen Durchflusswert zu erhalten,
über die Gesamtheit der vom Motor verwendeten Ansaugmodi, wobei ein erster Ansaugmodus durch die Aktivierung eines AGR-Hochdruckventils gekennzeichnet ist und/oder ein zweiter Ansaugmodus durch die Aktivierung eines AGR-Niederdruckventils gekennzeichnet ist.

7. Datenaufzeichnungsträger, der von einem Rechner lesbar ist, auf dem ein Computerprogramm aufgezeichnet ist, das Software-Einrichtungen zur Durchführung der Schritte des Verarbeitungsverfahrens nach einem der vorhergehenden Ansprüche enthält.

8. System (101) zur Verarbeitung eines von einem Durchflussmesser zur Messung eines Gasdurchflusses in einem Verbrennungsmotor stammenden Signals, **dadurch gekennzeichnet, dass** es Hardware- (22, 23, 24, 25, 26, 27, 32) und/oder Software-Einrichtungen zur Durchführung des Verarbeitungsverfahrens nach einem der Ansprüche 1 bis 5 oder zur Durchführung des Konfigurationsverfahrens nach Anspruch 6 enthält.

9. System (100) zur Messung eines Gasdurchflusses in einem Verbrennungsmotor, **dadurch gekennzeichnet, dass** es ein Verarbeitungssystem (101) nach Anspruch 8 und einen Durchflussmesser (21) enthält.

10. Kraftfahrzeug, das ein Verarbeitungssystem nach Anspruch 8 oder ein Messsystem nach Anspruch 9 enthält.

## Claims

1. Method for processing a signal from a flow meter (21) for measuring a gas flow in an internal combustion engine, **characterized in that** the signal is processed according to a first logic when the engine is operating in a first intake mode and **in that** the signal is processed according to a second logic when the engine is operating in a second intake mode, the first intake mode being **characterized by** the activation of high-pressure EGR valve and/or the second intake mode being **characterized by** the activation of a low-pressure EGR valve.

2. Processing method according to one of the preceding claims, **characterized in that** it comprises a step for conversion of an electrical characteristic of the signal from the flow meter into an instantaneous flow rate value, this conversion step being performed according to a first logic when the engine is operating in the first intake mode and according to a second logic when the engine is operating in the second intake mode.

3. Processing method according to either of the preceding claims, **characterized in that** it comprises a step for calculating an average so as to obtain, from instantaneous flow rate values, an average flow rate value.

4. Processing method according to one of the preceding claims, **characterized in that** it comprises a correction step so as to obtain, from a flow rate value, a corrected flow rate value, this correction step being performed according to a first logic when the engine is operating in the first intake mode and according to a second logic when the engine is operating in the second intake mode.

5. Processing method according to the preceding claim, **characterized in that** the correction step is performed by virtue of a value supplied by a mapping, this value depending on engine parameters, notably the engine load and/or the rotation speed.

6. Method for configuring a system for processing a signal from a flow meter for measuring a gas flow in an internal combustion engine, **characterized in that** it comprises an iteration of the following step:
- determining a processing logic for the signal from the flow meter so as to obtain a flow rate value,
on all the intake modes used by the engine, a first intake mode being **characterized by** the activation of the high-pressure EGR valve and/or a second intake mode being **characterized by** the activation of a low-pressure EGR valve.

7. Computer-readable data storage medium on which is stored a computer program comprising software means for implementing the steps of the processing method according to one of the preceding claims.

8. System (101) for processing a signal from a flow meter for measuring a gas flow in an internal combustion engine, **characterized in that** it comprises hardware means (22, 23, 24, 25, 26, 27, 32) and/or software means for implementing the processing method according to one of Claims 1 to 5 or for implementing the configuration method according to Claim 6.

9. System (100) for measuring a gas flow in an internal combustion engine, **characterized in that** it comprises a processing system (101) according to Claim 8 and a flow meter (21).

10. Motor vehicle comprising a processing system according to Claim 8 or a measuring system according to Claim 9.
